# FASCICULE DE BREVET EUROPEEN

(11) **EP 3 077 663 B1**
(45) Date de publication et mention de la délivrance du brevet: **26.12.2018**
(21) Numéro de dépôt: 14814977.6
(22) Date de dépôt: 27.11.2014
(51) Int. Cl.: F03D 7/04, F03D 1/06, F03D 13/00

(54) **TRANSMISSION SANS FIL ENTRE UNE PARTIE MOBILE ET UNE PARTIE FIXE DANS UNE NACELLE D'EOLIENNE.**
DRAHTLOSE ÜBERTRAGUNG ZWISCHEN EINEM BEWEGLICHEN TEIL UND EINEM STATIONÄREN TEIL EINER WINDMÜHLENGONDEL
WIRELESS TRANSMISSION BETWEEN A MOVABLE PORTION AND A STATIONARY PORTION IN A WINDMILL NACELLE

(30) Priorité: 27.11.2013 FR 1361673
(43) Date de publication de la demande: 12.10.2016
(73) Titulaire: Université de Picardie Jules Verne, 80025 Amiens Cedex 1 (FR); Mersen France Amiens SAS, 80080 Amiens (FR)
(72) Inventeur: ASTIER, Rémy, F-26100 Romans-sur-Isère (FR); DUBOIS, Jérôme, F-02315 Saint Quentin Cedex (FR); CAPITAINE, Thierry, F-02690 Essigny-le-Grand (FR); LORTHOIS, Aurélien, F-02110 Beaurevoir (FR); BOURNY, Valéry, 80000 Amiens (FR); DA ROS, Véronique, F-57220 Boulay (FR)
(74) Mandataire: Radault, Gabrielle
(86) Numéro de dépôt international: PCT/FR2014/053064
(87) Numéro de publication internationale: WO 2015/079176

(56) Documents cités:
- US-A1- 2009 160 189
- US-B2- 8 202 050

## Description

L'invention concerne la transmission de données entre une partie mobile et une partie fixe dans une nacelle d'éolienne.

Classiquement, on utilise un système de transmission de signaux ou STS (de l'anglais « Signal Transfer System ») comprenant un baguier (« Slip Ring » en anglais) pour transférer des données entre la partie fixe et la partie mobile. Le transfert de données peut notamment avoir lieu entre des capteurs installés sur une partie mobile de la nacelle, par exemple le nez de la nacelle de l'éolienne, et un superviseur comprenant au moins un processeur dans la nacelle ou au sol. Par exemple, des données de mesures issues de capteurs, par exemple des valeurs d'orientation de pales, de leur vibration, ou autre, peuvent être transmises via ce baguier, vers le processeur, et inversement des données de commande issues du processeur, par exemple des messages pour imposer un angle de rotation des pales, ou autre, peuvent également être transférées via le baguier.

Or un baguier, tout comme n'importe lequel système électromécanique impliquant un contact glissant, est sujet à des dégradations du fait de l'usure, les variations de température, la présence de poussières, les vibrations subies, etc.

Le document US 8,202,050 décrit un dispositif de baguier sans contact, c'est-à-dire intégrant des moyens de transmission sans fil. Ce dispositif est relativement peu contraignant en termes de maintenance.

Toutefois, une éolienne peut mettre en oeuvre un certain nombre de flux de données entre la partie fixe et la partie mobile. En particulier l'éolienne peut comprendre un certain nombre de capteurs et d'actionneurs.

Il a été envisagé de prévoir des moyens de transmission sans fil dédiés pour chaque fil, mais cette solution risque de s'avérer compliquée et coûteuse en terme de bande passante. On pourrait en particulier risquer une saturation du spectre de fréquences.

Il a également été envisagé de programmer chacun des appareils de la partie mobile et de la partie fixe de sorte que chacun de ces appareils n'émette des données que pendant des plages de temps prédéterminées.

Il existe donc un besoin pour une transmission de données entre une partie mobile et une partie fixe dans une nacelle d'éolienne permettant de concilier maintenance aisée, simplicité et faible occupation de la bande passante.

Il est proposé un dispositif de transmission de données entre une partie mobile et une partie fixe d'une éolienne, destiné à être installé sur l'un parmi la partie mobile et la partie fixe de l'éolienne, et comprenant :
- des moyens de raccordement à une pluralité de groupes d'au moins une voie filaire, pour recevoir une pluralité de flux de données respectifs, chaque flux étant issu d'un appareil correspondant installé sur l'un parmi la partie mobile et la partie fixe de l'éolienne,
- des moyens de traitement des flux reçus, agencés de façon à affecter à chaque flux reçu une valeur de paramètre de priorité, et en cas de réception concomitante de plusieurs flux, comparer les valeurs du paramètre de priorité associées aux flux reçus et transmettre en priorité vers un module d'émission/réception de signaux radiofréquences, en vue d'une transmission radiofréquence vers l'autre parmi la partie mobile et la partie fixe de l'éolienne, le flux associé à la valeur du paramètre de priorité correspondant au degré de priorité le plus élevé.

Ainsi, un tel dispositif, capable d'arbitrer entre les flux issus de plusieurs appareils différents, peut utiliser moins de bande passante que la solution envisagée, et ce tout en offrant le même confort en terme de maintenance.

En outre ce dispositif peut permettre de faire l'économie d'une programmation des différents appareils de la partie mobile, du type capteurs, actionneurs, ou autre, afin d'organiser les différentes communications, par exemple en allouant à chaque appareil des plages de temps pour la transmission et/ou la réception de données. Le dispositif proposé est ainsi relativement compatible avec des installations déjà existantes.

Il est en outre proposé un système de transmission de données entre une partie mobile et une partie fixe d'une éolienne, comprenant :
- un premier module interface destiné à être installé sur l'un parmi la partie mobile et la partie fixe de l'éolienne, et comprenant le dispositif décrit ci-dessus,
- un premier module d'émission/réception de signaux radiofréquences, raccordé au premier module interface, pour émettre des signaux radiofréquences à partir de signaux reçus du premier module interface,
- un deuxième module d'émission/réception de signaux radiofréquences, destiné à être installé sur l'autre parmi la partie mobile et la partie fixe de l'éolienne, pour recevoir les signaux radiofréquence émis par le premier module d'émission/réception, et
- un deuxième module interface, raccordé au deuxième module d'émission/réception, comprenant des moyens de raccordement pour transmettre des données issues du deuxième module d'émission/réception sans fil sur au moins un groupe d'au moins une voie filaire, vers au moins un appareil installé sur l'autre parmi la partie mobile et la partie fixe de l'éolienne.

Un tel système STS pourra venir remplacer avantageusement les systèmes STS avec baguier de l'art antérieur.

Avantageusement et de façon non limitative, pour au moins un flux, la valeur de paramètre de priorité affectée à ce flux peut être fonction :
- d'une valeur d'identifiant du protocole de communication correspondant à ce flux ; le dispositif peut ainsi comprendre ou être raccordé à une mémoire pour stocker des identifiants de protocoles et des valeurs de paramètres de priorité, cette mémoire étant structurée de façon à associer à au moins un identifiant de protocole une valeur correspondante du paramètre de priorité,
- d'une valeur d'identifiant de l'appareil de la partie mobile correspondant à ce groupe de voie(s) filaire(s), et/ou
- d'une valeur d'identifiant d'appareil de la partie fixe figurant dans un champ de destination des données reçues sur cette voie filaire.

Ainsi, les éventuelles données placées en attente et/ou non transmises pourront par exemple être des données d'importance moindre.

Un canal de communication implique plusieurs couches, dont une couche physique, chargée de la transmission effective de signaux ici électriques, ici sur un groupe de voie(s) filaire(s), et d'autres couches de plus haut niveau. A ces couches de plus haut niveau, dites protocolaires dans la présente demande, correspondent divers paramètres de protocole, notamment des paramètres relatifs à un débit, à une modulation, à un code correcteur d'erreurs, une structure de trames, à des règles de communication (par exemple prévoir l'émission d'une trame pour accuser réception et un nouvel envoi en cas de non-réception de la trame d'accusé de réception après un lapse de temps donné), etc.

L'invention n'est pas limitée par les protocoles de communication mis en oeuvre sur les voies filaires. On pourra par exemple citer RS232, RS422, RS485, Bus CAN (de l'anglais « Controller Area Network »), Ethernet, ProfiBus (de l'anglais « Process Field Bus »), Modbus, Interbus.

A un protocole donné, est associé un groupe de voie(s) comprenant un nombre défini de voies, par exemple trois voies pour le protocole RS232, deux ou quatre voies pour le protocole RS485, deux voies pour le CAN bus, et cinq voies pour l'Ethernet.

Le dispositif décrit ci-dessus peut ainsi permettre d'arbitrer les flux selon la robustesse du protocole et/ou la criticité supposée des données. Par exemple un flux selon un protocole CAN pourra être transmis avec une priorité plus élevée qu'un flux Ethernet.

Cet arbitrage peut aussi être fonction de l'importance des différents appareils raccordés au dispositif. Par exemple, les données issues d'un capteur d'humidité pourront être transmises avec un degré de priorité moindre que les données issues d'un capteur de vitesse des pales.

Avantageusement et de façon non limitative, le premier module interface et le premier module d'émission/réception de signaux radiofréquences peuvent être destinés à une installation sur la partie mobile de l'éolienne, par exemple sur la partie mobile d'un système de transfert de signaux, tandis que le deuxième module interface et le deuxième module d'émission/réception de signaux radiofréquences peuvent être destinés à une installation sur la partie fixe de l'éolienne, par exemple sur la partie fixe d'un système de transfert de signaux.

Chacun des modules d'émission/réception peut par exemple comprendre une antenne d'émission/réception radiofréquences, un convertisseur analogique-numérique et un convertisseur numérique-analogique raccordés à l'antenne et au module interface correspondant.

Avantageusement et de façon non limitative, les moyens de traitement peuvent être agencés de façon à transmettre en priorité le flux associé à la valeur du paramètre de priorité correspondant au degré de priorité le plus élevé seulement lorsque ces moyens de traitement sont dans un premier mode de fonctionnement. Les moyens de traitement peuvent être agencés de façon à sortir de ce premier mode de fonctionnement et à passer dans un deuxième mode de fonctionnement suite à la réception d'un signal d'abolition des priorités.

Dit autrement, le dispositif peut donner la main à un autre protocole que celui transmis jusque là.

Le signal d'abolition des priorités peut être issu d'un compteur, par exemple d'un compteur de cycles d'horloge, d'un compteur de nombre de trames transmises, d'un compteur de nombre de trames mises en attente et/ou non transmises etc.

Dans le deuxième mode de fonctionnement, les moyens de traitement s'abstiennent de transmettre en priorité le flux associé à la valeur du paramètre de priorité correspondant au degré de priorité le plus élevé.

Par exemple, les moyens de traitement effectuent une lecture des éventuelles autres valeurs courantes du paramètre de priorité, et si un flux a effectivement été reçu et placé en attente car associé à une valeur de paramètre de priorité correspondant à un degré de priorité moindre qu'un autre flux, les données correspondant à ce flux peuvent alors être transmises.

Selon un autre exemple, et notamment lorsque les moyens de traitement passent dans le deuxième mode de fonctionnement suite à la réception d'un signal indiquant que N trames de tel flux ont été mises en attente, le dispositif choisit de transmettre des données de ce flux, par exemple la trame la plus ancienne mise en attente, ou bien encore toutes les trames mises en attente.

Avantageusement et de façon non limitative, les moyens de raccordement peuvent comprendre une pluralité d'éléments de raccordement, chaque élément correspondant à une voie filaire. Un élément de raccordement peut par exemple comprendre une broche, ou bien encore un bus correspondant à une broche, ou autre.

Avantageusement et de façon non limitative, le premier module interface comprend une mémoire pour stocker :
- une pluralité d'identifiants d'éléments de raccordement, chaque identifiant correspondant à un élément de raccordement de la pluralité d'éléments de raccordement,
- un jeu d'au moins deux valeurs distinctes d'identifiants de protocoles.

Cette mémoire est agencée de façon à associer à au moins un, et de préférence à chaque, identifiant d'élément de raccordement, une valeur d'identifiant de protocole.

Avantageusement, cette mémoire est reprogrammable, de sorte que les associations entre identifiants d'éléments de raccordement et identifiants de protocole peuvent être reprogrammées.

Ainsi, on pourra prévoir de programmer le dispositif de sorte que sur tel groupe de broches on s'attende à recevoir des données conformément à tel protocole. Dit autrement, on peut allouer les broches du dispositif à tel ou tel protocole de façon flexible.

On pourra ainsi programmer le dispositif avant son installation dans l'éolienne, en fonction des voies filaires et des protocoles utilisés sur cette éolienne. Le dispositif peut ainsi être compatible avec plusieurs types d'éoliennes.

Ce premier module interface peut par exemple être intégré dans ou comprendre un ou plusieurs circuits intégrés, par exemple un ou plusieurs processeurs, par exemple un microcontrôleur, notamment un microcontrôleur intégrant une fonctionnalité dite PPS (de l'anglais « Peripheral PIN Select »), ou autre.

Avantageusement et de façon non limitative, le premier module interface peut comprendre un réseau logique programmable, avantageusement un FPGA (de l'anglais « Field Programmable Gate Array »).

Les moyens de traitement peuvent par exemple comprendre un coeur de processeur ou CPU (de l'anglais « Central Processing Unit »), des blocs logiques, ou autres.

Avantageusement et de façon non limitative, les moyens de traitement peuvent être agencés de façon à, pour au moins un groupe de voie(s) filaire(s) correspondant à un protocole :
- séparer les données reçues en blocs de données, à partir de valeurs de paramètres de structure de trame du protocole associé à ce groupe de voie(s) filaire(s),
- affecter à chaque bloc de données une valeur de paramètre d'utilité, en fonction de valeur(s) de paramètre de champ correspondant à ce bloc de donnée, et
- pour chaque bloc de données, décider en fonction de la valeur de paramètre d'utilité affectée à ce bloc de conserver ou non ledit bloc en vue d'une transmission vers le deuxième module d'émission/réception sans fil.

Ainsi on trie les données reçues de façon à transmettre seulement les données utiles, ce qui peut permettre d'économiser encore davantage de bande passante.

On pourra par exemple classer les données reçues en données utiles ou MSG (de l'anglais « message ») et en informations de service ou IS, et s'abstenir de transmettre vers le module radiofréquences les informations de service.

Avantageusement et de façon non limitative, les moyens de traitement peuvent en outre être agencés de façon à générer une trame de données comprenant des données utiles (au moins un bloc de données conservé), la trame de données étant structurée de façon à permettre une reconstruction ultérieure d'une trame selon le protocole d'origine, c'est-à-dire mis en oeuvre sur le groupe de voie(s) filaire(s) correspondant à ces données utiles. La trame de données peut ainsi être conformée selon un protocole propriétaire.

La trame de données peut par exemple comprendre, outre ledit au moins un bloc de données conservé, un champ d'en-tête comprenant au moins :
- un identifiant d'élément de raccordement, par exemple un identifiant de broche, du deuxième module interface ;
- un identifiant de protocole, pour identifier le protocole du flux transmis, et/ou
- un identifiant de type d'encapsulation de l'au moins un bloc de données intégré dans la trame de données correspondant à ce champ d'en-tête.

Ces valeurs d'identifiants peuvent ainsi permettre, après réception, de renvoyer les données utiles ou MSG vers l'appareil destinataire, et selon le protocole attendu par cet appareil destinataire. Ainsi, le remplacement d'un système STS à baguiers par le système décrit ci-dessus peut être transparent pour les dispositifs déjà installés sur une nacelle existante.

Concernant l'identifiant de type d'encapsulation, on peut préciser que les données utiles, c'est-à-dire le ou les blocs de données conservés, peuvent en effet comprendre un ou des champs d'identification et un ou des champs de données. Selon le type d'encapsulation mis en oeuvre, on pourra prévoir de conserver le(s) champ(s) d'identification de chaque bloc de donné conservé (notamment lorsque la trame de donnée comprend un seul bloc ou lorsque les valeurs de champ d'identification diffèrent d'un bloc à l'autre), ou bien encore de ne conserver qu'un seul champ d'identification pour l'ensemble des champs de données des blocs transmis.

Avantageusement et de façon non limitative, la trame de données peut comprendre une pluralité de blocs de données conservés issue d'une pluralité de trames reçues sur le groupe de voie filaire correspondant à ces données utiles.

Ainsi, on peut prévoir de regrouper les données de plusieurs trames d'origine dans une même trame à transmettre, ce qui peut là aussi permettre de limiter la bande passante utilisée.

Avantageusement et de façon non limitative, les moyens de traitement peuvent en outre être agencés de façon à intégrer des données à transmettre, par exemple la trame de données générée, dans une trame conforme à un protocole de communication radiofréquences. Dit autrement, on encapsule des données à transmettre, par exemple la trame de données générée, dans une trame conforme à un protocole de communication radiofréquences mis en oeuvre par les moyens d'émission/ réception.

L'invention n'est en rien limitée à un protocole de communication radiofréquences donné. On pourra par exemple citer Bluetooth®, Zigbee® et MiWi™ ou encore l'Ultra WideBand (UWB).

Dans un mode de réalisation, on pourrait prévoir d'intégrer dans une même trame conforme au protocole de communication radiofréquences au moins deux trames de données générées par les moyens de traitement, ces trames de données comprenant des données utiles issues d'au moins deux groupes de voie(s) filaire(s) respectifs. Ainsi, la trame radiofréquence obtenue pourrait par exemple comprendre plusieurs trames de données ayant chacune un champ de données et un champ d'en-tête avec un bit d'identification du protocole auquel se conforment les données du champ de données.

Il est en outre proposé un procédé de transmission de données entre une partie mobile et une partie fixe d'une éolienne, mis en oeuvre sur l'un parmi la partie mobile et la partie fixe de l'éolienne, et comprenant :
- recevoir une pluralité de flux de données, grâce à des moyens de raccordement à une pluralité de groupes d'au moins une voie filaire, chaque groupe correspondant à un flux de données respectif, chaque flux étant issu d'un appareil correspondant installé sur l'un parmi la partie mobile et la partie fixe de l'éolienne,
- traiter les flux reçus de façon à affecter à chaque flux reçu une valeur de paramètre de priorité, et en cas de réception concomitante de plusieurs flux, comparer les valeurs du paramètre de priorité associées aux flux reçus et transmettre en priorité vers un module d'émission/réception de signaux radiofréquences, en vue d'une transmission radiofréquence vers l'autre parmi la partie mobile et la partie fixe de l'éolienne, le flux associé à la valeur du paramètre de priorité correspondant au degré de priorité le plus élevé.

Le procédé décrit ci-dessus peut être mis en oeuvre par des moyens de traitement numérique, par exemple un processeur ou bien avantageusement un FPGA.

Il est en outre proposé un produit programme d'ordinateur comprenant les instructions pour effectuer les étapes du procédé décrit ci-dessus lorsque ces instructions sont exécutées par un circuit intégré du type processeur ou circuit logique programmable. Ce programme peut être stocké sur un support mémoire, par exemple un disque dur ou autre, téléchargé d'un réseau de télécommunication de type Internet, ou autre.

Il est enfin proposé une éolienne comprenant un système tel que décrit ci-dessus.

L'invention sera mieux comprise en référence aux figures, lesquelles illustrent des modes de réalisation donnés à titre d'exemple et non limitatifs.
La figure 1 montre schématiquement un exemple d'éolienne selon un mode de réalisation de l'invention.
La figure 2 montre un exemple de système STS selon un mode de réalisation de l'invention.
La figure 3 illustre schématiquement un exemple de dispositif selon un mode de réalisation de l'invention.

Des références identiques peuvent désigner des éléments identiques ou similaires, dans leur forme ou leur fonction, d'une figure à l'autre.

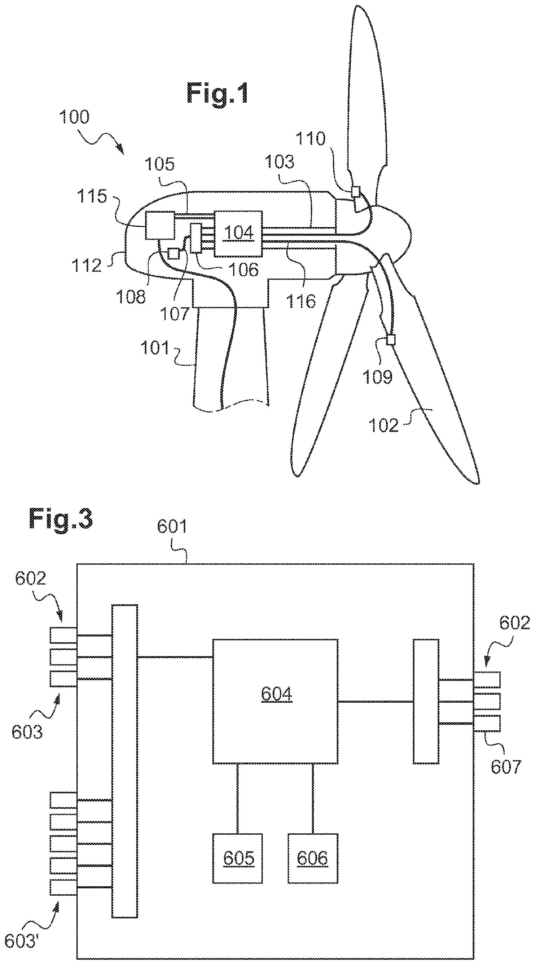

En référence à la figure 1, une éolienne 100 comprend un mât 101, une nacelle 112 et des pales 102 solidarisées à un arbre dit lent 103.

Un multiplicateur 104 permet de convertir le mouvement de rotation de l'arbre lent 103 en un mouvement plus rapide d'un arbre dit rapide 105.

Un générateur 115 permet de générer du courant à partir du mouvement de cet arbre rapide 105.

L'éolienne est équipée de capteurs, par exemple des capteurs de vibration ou autre, dont un seul 109 est représenté ici à des fins de clarté. Un superviseur 108, comprenant par exemple un ou plusieurs processeur(s), reçoit des signaux issus de ces capteurs et commande en conséquence des actionneurs, par exemple un moteur 110 pour modifier l'orientation des pales 102.

Les appareils 109, 110 sont ainsi solidaires des pales, tandis que le processeur reste fixe.

Des câbles 116 raccordés aux capteurs ou aux actionneurs sont installés à l'intérieur de l'arbre lent 103. Pour plus de clarté, on a représenté seulement deux câbles, mais en réalité à chaque appareil 109, 110, correspond un groupe d'un ou plusieurs fils raccordant cet appareil à un système de transfert de signaux ou STS 106.

Le STS 106 est situé à proximité du multiplicateur 104 et couplé mécaniquement à l'arbre lent 103. Le STS 106 est raccordé au superviseur par un groupe d'une ou plusieurs voies filaires, dont une seule 107 est ici représentée à des fins de clarté.

Des câbles supplémentaires et non représentés permettent de transférer de la puissance entre le STS 106 et le moteur 110 d'orientation des pales.

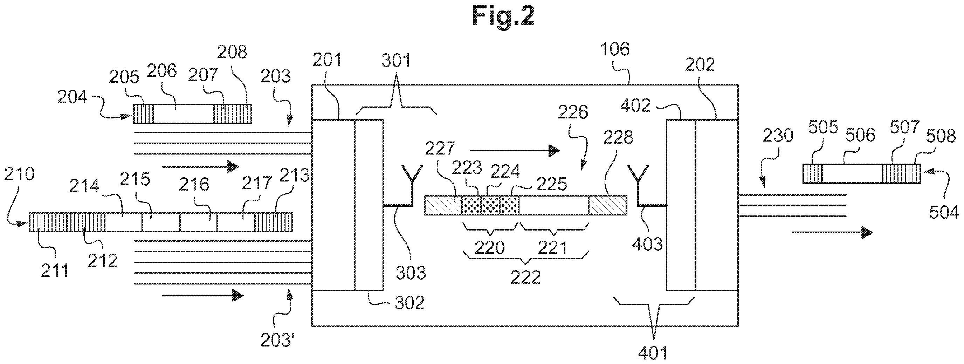

La figure 2 montre de façon plus détaillée, mais schématique, le système STS de la figure 1.

Le système STS 106 comprend un premier module interface 201 monté sur la partie mobile de l'éolienne, côté arbre lent, et comprenant un dispositif de transmission de données, par exemple un circuit intégré de type FPGA, dont la structure est détaillée ci-dessous en référence à la figure 3. Ce premier module interface 201 est raccordé à un premier module d'émission/réception de signaux radiofréquences 301.

Ce premier module d'émission réception 301 comprend des moyens de conversion numérique- analogique et analogique-numérique 302, ainsi qu'une antenne radiofréquences 303.

Le système 106 comprend en outre un deuxième module interface 202 et un deuxième module d'émission/réception de signaux de radio fréquence 401.

Ce module 401 comprend également une antenne 403 et un convertisseur analogique-numérique et numérique-analogique 402.

Les convertisseurs 302, 402 sont raccordés d'une part aux modules interfaces 201, 202 et d'autre part, aux antennes 303, 403, respectivement.

Le circuit intégré du module interface 201 comprend des moyens de raccordement, par exemple des broches, pour recevoir des flux issus de plusieurs groupes de fils. Sur la figure 2, seulement deux groupes de fils 203, 203' sont représentés, mais on pourrait bien entendu en prévoir davantage. A chaque groupe de fil correspond un appareil installé sur une pale de l'éolienne, par exemple un capteur, un actionneur ou autre, et un protocole.

Ainsi, les trois fils du groupe de fils 203 servent au transfert de données suivant un protocole RS232, tandis que les cinq fils du groupe 203' servent au transfert de données suivant un protocole Ethernet.

Le circuit intégré du module 201 reçoit ces différents flux. Lorsque des données sont reçues concomitamment sur les groupes de fils 203 et 203', le circuit intégré du module 201 affecte à chacun de ces flux un degré de priorité et transfère vers le convertisseur 302 en priorité le flux dont la valeur du paramètre de priorité correspond au degré de priorité le plus élevé. Ainsi, le module interface 201 réalise un arbitrage des différents flux reçus, ce qui peut permettre de limiter la bande passante utilisée.

Dans l'exemple de la figure 2, c'est la trame RS232, reçue sur le groupe de fils 203 qui est transmise en priorité, et la trame Ethernet reçue sur le groupe de fils 303' est conservée dans une mémoire du circuit intégré du module 201.

En outre, le module 201 est capable de trier parmi des données les données reçues les données utiles des informations de service. Sur la figure 2, les champs correspondant aux informations de service sont représentés avec des hachures verticales.

Ainsi, une trame RS232 204 comprend un bit de départ 205 ou « start bit » en anglais, un champ de données 206 comprenant huit bits, un bit de parité 207, et un bit de fin de trame 208, ou « stop bit » en anglais. Le module 201 permet de transmettre parmi ces différents champs 205, 206, 207, 208, seulement le champ 208 correspondant aux données utiles.

De la même façon, une trame Ethernet 210 comprend des informations de service 211, 212, 213, et des données utiles ou messages 214, 215, 216, 217. Plus précisément, les informations de service comprennent une partie préambule de sept octet 211, un champ SFD (de l'anglais « Start Frame Delimiter ») 212, et un champ FCS 213 (de l'anglais « Frame Check Sequence »). Les données utiles comprennent :
- un champ d'adresse source 214 long de 6 octets,
- un champ d'adresse destination 215 également long de 6 octets,
- un champ de type et de taille de données transmises 216 long de 2 octets, et enfin
- un champ de données 217 d'une longueur susceptible de varier entre 46 octets de 1500 octets.

Là encore, le module interface 201 est capable d'isoler des blocs de données correspondant aux champs 214, 215, 216, 217 de cette trame 210. Seuls ces blocs de données utiles seront conservés dans une mémoire du circuit intégré, en vue d'une transmission ultérieure, lorsque les données RS232 auront été transmises.

Le circuit intégré 201 récupère ainsi les blocs de données utiles, 206, 214, 215, 216, 217 et les transmet vers le convertisseur 302. Plus précisément, le module interface 201 génère une trame de données 222 comprenant un en-tête réalisé selon un protocole propriétaire 220, ainsi qu'un ou plusieurs blocs de données conservées 221.

Plus précisément, l'en-tête 220 comprend trois champs, à savoir :
- Un champ 223 correspondant au numéro de voie du protocole envoyé. Dans cet exemple, ce champ occupe une longueur de trois bits, ce qui permet de gérer huit voies filaires.
- Un champ de type de protocole envoyé 224. Dans cet exemple ce champ occupe trois autres bits dont les valeurs correspondant à des identifiants de protocole, par exemple RS232, RS422, RS485, Bus CAN, Ethernet ou autre. Le deuxième module interface 202 peut ainsi, lors du traitement de cet en-tête 220, connaître les champs à récupérer.
- Un champ de type d'encapsulation 225, occupant deux bits et permettant de connaître le type d'encapsulation réalisé dans cette trame de données 222.

Dans l'exemple représenté, la trame transmise en priorité 204 est une trame RS232, de structure relativement simple, et le champ 221 comprend simplement les valeurs des huit bits du champ 206 de la trame d'origine 204.

Toutefois, la trame de donnée 222 peut avoir une structure plus élaborée. En particulier, la trame de données 222 peut comprendre plusieurs blocs de données conservées, par exemple plusieurs champs 206 issus de plusieurs trames RS232 (ou autre) successives.

Par exemple, lorsque les signaux radiofréquences sont générés à partir de données Ethernet, on pourra prévoir de transmettre les données des quatre champs 214, 215, 216, 217 dans le champ 221. On pourra en outre prévoir d'ajouter à ce champ 221 d'autres groupes de quatre champs issus d'autres trames Ethernet.

Parmi ces quatre champs 214, 215, 216, 217, les champs d'adresse source et destination 214 et 215, peuvent être identiques d'une trame Ethernet à l'autre. Aussi, un mode d'encapsulation intéressant pourra consister à ne transmettre dans la trame de données 222 qu'une seule fois les valeurs d'adresse source et destination et ce, même si les données issues de plusieurs trames Ethernet 210 sont intégrées dans une seule trame de données 222.

Bien entendu, l'invention n'est pas limitée à un type d'encapsulation particulier. On pourra tout à fait prévoir de répéter dans une même trame de données 222 ces valeurs d'adresse et de destination, même si elles sont identiques.

Dans le cas non représenté d'un bus CAN, les données utiles comprennent un nombre de champs variable selon le type de trame (requête ou données). Plus précisément, chaque trame comprend un champ d'identification de 11 bits pour la norme CAN Bus 2.0A et 29 bits pour la norme 2.0B et un champ de type de trame de 1 bit. Si la valeur de ce dernier bit de type est à 0, c'est-à-dire que la trame est une trame de données, alors la trame comporte en outre deux champs supplémentaires, à savoir un champ de taille des données transmises de 4 bits, et un champs de données proprement dites, dont la taille, indiquée par la valeur du champ de taille, est susceptible de varier entre 0 et 8 octets. La trame de données générée par le module interface 201 pourra ainsi intégrer entre deux et quatre champs pour chaque trame CAN, selon que la trame CAN d'origine est une trame de requête ou de données. Lorsque les données issues de plusieurs trames CAN sont regroupées en une seule trame de donnée, on pourra par exemple prévoir, selon le type d'encapsulation mis en oeuvre, de transmettre une seule fois le champ d'identification, puis pour chaque trame un seul champ (cas d'une trame source de requête) ou trois champs (cas d'une trame source de données).

Le module d'interface 221 est en outre agencé pour intégrer la trame de données 222 dans une trame 226 conforme à un protocole de communication radiofréquences mis en oeuvre entre les antennes 303 et 403, par exemple un protocole de communication Bluetooth®. Ainsi, la trame 226 peut comprendre en outre des champs Bluetooth® ou autres 227, 228, du type mis en oeuvre dans les communications de Bluetooth® ou autres.

A la réception, le deuxième module interface 202, est agencé pour traiter ces champs 227, 228 et pour traiter les champs 223, 224, 225 de l'en-tête 220. Les données 221 sont ainsi transférées vers le groupe de fils correspondant aux numéros de broches indiquées dans le champ 223, après ré-encapsulation selon le type de protocole indiqué dans le champ 224.

Dans cet exemple un seul groupe de fils 230 est représenté côté partie fixe de la nacelle, et un champ 506 comprenant huit bits correspondant aux huit bits du champ 206 de la trame RS232 204 est transmis, après encapsulation dans une trame RS232 504 comprenant en outre des champs 505, 507 et 508 conformes au protocole RS232. Le champ 505 correspond ainsi à un bit de départ, le champ 507 à un bit de parité, et le champ 508 à un bit de fin de trame.

L'appareil destinataire, par exemple le superviseur, peut donc recevoir cette trame 504, du même type que la trame 204 et transportant les mêmes données utiles.

Ainsi, le remplacement d'un système STS à baguier par ce système STS 106 peut être effectué sans remplacement ni reprogrammation des appareils côté partie fixe et côté partie mobile.

En référence à la figure 3, un circuit intégré 601 est intégré au module d'interface référencé 201 sur la figure 2. Ce circuit intégré comprend des broches 602 dont un groupe de broches 603 destiné à recevoir des données suivant un protocole RS232 et un groupe de broches de 603' destiné à recevoir des données Ethernet. On comprendra que les broches 603 sont destinées à être raccordées aux fils du groupe 203, tandis que les broches 603' sont destinées à être raccordées aux groupes de fils 203'.

Le circuit intégré 601 comprend en outre des moyens de traitement 604 pour affecter un degré de priorité à chaque flux, ainsi que deux mémoires 605 et 606.

La mémoire 605 stocke des identifiants de broches et des identifiants de protocoles. Cette mémoire 605 est structurée de sorte qu'à chaque broche soit associé un identifiant de protocole. Cette mémoire 605 est reprogrammable, c'est-à-dire que l'on allouer dynamiquement telle ou telle broche à tel ou tel protocole. Cette mémoire 605 est en outre structurée de façon à associer à chaque protocole une valeur correspondante de paramètre de priorité, ou degré de priorité. Par exemple, des données reçues suivant un protocole CAN seront considérées comme prioritaires par rapport aux données reçues suivant un protocole Ethernet.

La mémoire 606 est utilisée pour conserver temporairement les flux reçus mais considérés comme non prioritaires.

Dans ce mode de réalisation, chaque fois qu'un flux reçu est conservé temporairement en mémoire car un autre flux, considéré comme prioritaire est transmis via des broches 607 vers le superviseur, un compteur est incrémenté. Lorsque le compteur atteint un seuil, ce seuil étant variable selon le type de protocole associé au flux à conserver dans la mémoire 606, un signal d'abolition des priorités est généré et les moyens de traitement 604, passent dans un autre mode de fonctionnement, dans lequel on impose la transmission du flux jusque là considéré comme non prioritaire.

Les moyens de traitement 604, sont en outre agencés pour trier les données reçues des différents flux en information de service et en données utiles. Chaque bloc de données utiles est transmis, alors que les informations de service sont effacées.

La transmission de ces données utiles s'effectue via un protocole propriétaire, c'est-à-dire que dans cet exemple, on génère des trames de données en concaténant un ou plusieurs blocs de données utiles, et un champ d'en-tête destiné à être traité par un circuit intégré du même type que le circuit intégré 601, et intégré au deuxième module interface, référencé 202 sur la figure 2.

Les moyens de traitement 604 sont en outre agencés pour générer des trames suivant un protocole de communication radio fréquence, c'est-à-dire que chaque trame de données utiles est encapsulée par exemple dans des champs de début et/ou de fin, conformes au protocole de communication radiofréquences mis en oeuvre dans le système STS référencé 106 sur les figures 1 et 2.

On comprendra que le circuit intégré 601 est en outre agencé pour traiter les données issues du ou des groupes de fils situés côté antenne conformément au protocole de communication radiofréquences mis en oeuvre, et conformément aux données figurant dans les entête du type 220 reçu.

Le deuxième module interface 202 peut ainsi intégrer un circuit intégré non représenté et semblable dans sa structure et son fonctionnement circuit intégré référencé 601 sur la figure 3.

Le circuit intégré référencé 601 est dans cet exemple un FPGA.

## Revendications

1. Dispositif de transmission (601) de données entre une partie mobile et une partie fixe d'une éolienne, destiné à être installé sur l'un parmi la partie mobile et la partie fixe de l'éolienne, et comprenant :
- des moyens de raccordement (603, 603') à une pluralité de groupes d'au moins une voie filaire, pour recevoir une pluralité de flux de données respectifs, chaque flux étant issu d'un appareil correspondant installé sur l'un parmi la partie mobile et la partie fixe de l'éolienne,
- des moyens de traitement (604) des flux reçus, agencés de façon à affecter à chaque flux reçu une valeur de paramètre de priorité, et en cas de réception concomitante de plusieurs flux, comparer les valeurs du paramètre de priorité associées aux flux reçus et transmettre en priorité vers un module d'émission/réception de signaux radiofréquences, en vue d'une transmission radiofréquence vers l'autre parmi la partie mobile et la partie fixe de l'éolienne, le flux associé à la valeur du paramètre de priorité correspondant au degré de priorité le plus élevé.

2. Dispositif (601) selon la revendication 1, ledit dispositif étant agencé de sorte que pour au moins un flux, la valeur de paramètre de priorité affectée à ce flux soit fonction d'une valeur d'identifiant du protocole de communication correspondant audit flux.

3. Dispositif (601) selon l'une quelconque des revendications 1 ou 2, dans lequel les moyens de traitement sont agencés de façon à transmettre en priorité le flux associé à la valeur du paramètre de priorité correspondant au degré de priorité le plus élevé seulement lorsque lesdits moyens de traitement sont dans un premier mode de fonctionnement, et dans lequel
les moyens de traitement sont agencés de façon à sortir de ce premier mode de fonctionnement et à passer dans un deuxième mode de fonctionnement suite à la réception d'un signal d'abolition des priorités.

4. Dispositif (601) selon l'une quelconque des revendications 1 à 3, dans lequel
les moyens de raccordement comprennent une pluralité d'éléments de raccordement (603, 603'), chaque élément correspondant à une voie filaire, et
le dispositif comprend en outre une mémoire reprogrammable (605) pour stocker une pluralité d'identifiants d'éléments de raccordement, chaque identifiant correspondant à un élément de raccordement de la pluralité d'éléments de raccordement, et un jeu d'au moins deux valeurs distinctes d'identifiants de protocoles, cette mémoire étant agencée de façon à associer à au moins un identifiant d'élément de raccordement une valeur d'identifiant de protocole.

5. Dispositif (601) selon l'une quelconque des revendications 1 à 4, dans lequel les moyens de traitement sont agencés de façon à, pour au moins un groupe d'au moins une voie filaire, trier les données reçues en informations de service et en données utiles, et de façon à s'abstenir de transmettre vers le module d'émission/réception de signaux radiofréquences les données identifiées comme informations de service.

6. Dispositif (601) selon la revendication 5, dans lequel les moyens de traitement sont agencés de façon à générer une trame de données comprenant des données utiles et structurée de façon à permettre une reconstruction ultérieure d'une trame selon un protocole mis en oeuvre sur le groupe d'au moins une voie filaire correspondant auxdites données utiles.

7. Dispositif selon la revendication 6, dans lequel les moyens de traitement sont agencés de façon à générer une trame conforme à un protocole de communication radiofréquences et comprenant la trame de données.

8. Système de transmission (106) de données entre une partie mobile et une partie fixe d'une éolienne, comprenant :
- un premier module interface (201) destiné à être installé sur l'un parmi la partie mobile et la partie fixe de l'éolienne, et comprenant le dispositif selon l'une quelconque des revendications 1 à 7,
- un premier module d'émission/réception de signaux radiofréquences (301), raccordé au premier module interface, pour émettre des signaux radiofréquences à partir de signaux reçus du premier module interface,
- un deuxième module d'émission/réception de signaux radiofréquences (401), destiné à être installé sur l'autre parmi la partie mobile et la partie fixe de l'éolienne, pour recevoir les signaux radiofréquences émis par le premier module d'émission/réception, et
- un deuxième module interface (202), raccordé au deuxième module d'émission/réception, comprenant des moyens de raccordement pour transmettre des données issues du deuxième module d'émission/réception sans fil sur au moins un groupe d'au moins une voie filaire (230), vers au moins un appareil installé sur l'autre parmi la partie mobile et la partie fixe de l'éolienne.

9. Eolienne (100) comprenant le système de transmission (106) selon la revendication 8.

10. Procédé de transmission de données entre une partie mobile et une partie fixe d'une éolienne, mis en oeuvre sur l'un parmi la partie mobile et la partie fixe de l'éolienne, et comprenant :
- recevoir une pluralité de flux de données, grâce à des moyens de raccordement à une pluralité de groupes d'au moins une voie filaire, chaque groupe correspondant à un flux de données respectif, chaque flux étant issu d'un appareil correspondant installé sur l'un parmi la partie mobile et la partie fixe de l'éolienne,
- traiter les flux reçus de façon à affecter à chaque flux reçu une valeur de paramètre de priorité, et en cas de réception concomitante de plusieurs flux, comparer les valeurs du paramètre de priorité associées aux flux reçus et transmettre en priorité vers un module d'émission/réception de signaux radiofréquences, en vue d'une transmission radiofréquence vers l'autre parmi la partie mobile et la partie fixe de l'éolienne, le flux associé à la valeur du paramètre de priorité correspondant au degré de priorité le plus élevé.

## Patentansprüche

1. Datenübertragungsvorrichtung (601) zwischen einem beweglichen Teil und einem stationären Teil einer Windmühle, welche dazu bestimmt ist, an einem von dem mobilen Teil und dem stationären Teil der Windmühle installiert zu werden, und umfassend:
- Verbindungsmittel (603, 603') mit einer Vielzahl von Gruppen mindestens eines Kabels, um eine Vielzahl jeweiliger Datenströme zu empfangen, wobei jeder Strom von einer entsprechenden Einrichtung stammt, die an einem von dem mobilen Teil und dem stationären Teil der Windmühle installiert ist,
- Behandlungsmittel (604) der empfangenen Ströme, die eingerichtet sind, jedem empfangenen Strom einen Prioritätsparameterwert zuzuordnen, und, im Fall des gleichzeitigen Empfangs mehrerer Ströme, die Prioritätsparameterwerte zu vergleichen, die mit den empfangenen Strömen assoziiert sind, und prioritär zu einem Sende/Empfangsmodul von Funkfrequenzsignalen zu übertragen, für eine Funkfrequenzübertragung an den anderen von dem mobilen Teil und dem stationären Teil der Windmühle, wobei der mit dem Prioritätsparameterwert assoziierte Strom dem höchsten Prioritätsgrad entspricht.

2. Vorrichtung (601) nach Anspruch 1,
wobei die Vorrichtung derart eingerichtet ist, dass, für mindestens einen Strom, der Prioritätsparameterwert, der diesem Strom zugeordnet ist, eine Funktion eines Identifikatorwerts des Kommunikationsprotokolls ist, das dem Strom entspricht.

3. Vorrichtung (601) nach einem der Ansprüche 1 oder 2,
wobei die Behandlungsmittel eingerichtet sind, prioritär den mit dem Prioritätsparameterwert assoziierten Strom, der dem höchsten Prioritätsgrad entspricht, nur zu übertragen, wenn sich die Behandlungsmittel in einem ersten Betriebsmodus befinden, und wobei
die Behandlungsmittel eingerichtet sind, nach dem Empfang eines Aufhebungssignals der Prioritäten diesen ersten Betriebsmodus zu verlassen und in einen zweiten Betriebsmodus überzugehen.

4. Vorrichtung (601) nach einem der Ansprüche 1 bis 3, wobei:
die Verbindungsmittel eine Vielzahl von Verbindungselementen (603, 603') umfassen, wobei jedes Element einem Kabel entspricht, und
die Verbindung außerdem einen neuprogrammierbaren Speicher (605) umfasst, um eine Vielzahl von Identifikatoren von Verbindungselementen zu speichern, wobei jeder Identifikator einem Verbindungselement der Vielzahl von Verbindungselementen und einem Satz von mindestens zwei verschiedenen Protokollidentifikatorwerten entspricht, wobei dieser Speicher eingerichtet ist, einen Protokollidentifikatorwert mit mindestens einem Verbindungselementidentifikator zu assoziieren.

5. Vorrichtung (601) nach einem der Ansprüche 1 bis 4,
wobei die Behandlungsmittel eingerichtet sind, für mindestens eine Gruppe mindestens eines Kabels, die empfangenen Daten in Dienstinformationen und Nutzdaten zu sortieren, und an das Sende/Empfangsmodul der Funkfrequenzsignale die als Dienstinformationen identifizierten Daten nicht zu übertragen.

6. Vorrichtung (601) nach Anspruch 5,
wobei die Behandlungsmittel eingerichtet sind, einen Datenrahmen zu generieren, der Nutzdaten umfasst und strukturiert ist, eine letztliche Wiederherstellung eines Rahmens gemäß einem Protokoll zu gestatten, das an der Gruppe mindestens eines Kabels durchgeführt wird, die den Nutzdaten entspricht.

7. Vorrichtung nach Anspruch 6,
wobei die Behandlungsmittel eingerichtet sind, einen Rahmen zu generieren, der mit einem Funkfrequenzkommunikationsprotokoll konform ist und den Datenrahmen umfasst.

8. Datenübertragungssystem (106) zwischen einem beweglichen Teil und einem stationären Teil einer Windmühle, umfassend:
- ein erstes Schnittstellenmodul (201), das dazu bestimmt ist, an einem von dem mobilen Teil und dem stationären Teil der Windmühle installiert zu werden, und umfassend die Vorrichtung nach einem der Ansprüche 1 bis 7,
- ein erstes Sende/Empfangsmodul von Funkfrequenzsignalen (301), das mit dem ersten Schnittstellenmodul verbunden ist, um Funkfrequenzsignale aus Signalen zu senden, die von dem ersten Schnittstellenmodul empfangen werden,
- ein zweites Sende/Empfangsmodul von Funkfrequenzsignalen (401), das dazu bestimmt ist, an dem anderen von dem beweglichen Teil und dem stationären Teil der Windmühle installiert zu werden, um die Funkfrequenzsignale zu empfangen, die von dem ersten Sende/Empfangsmodul gesendet werden, und
- ein zweites Schnittstellenmodul (202), das mit dem zweiten Sende/Empfangsmodul verbunden ist, umfassend Verbindungsmittel, um Daten, die von dem zweiten Sende/Empfangsmodul ausgegeben werden, drahtlos auf mindestens einer Gruppe mindestens eines Kabels (230) zu übertragen, an mindestens eine Einrichtung, die an dem anderen von dem beweglichen Teil und dem stationären Teil der Windmühle installiert ist.

9. Windmühle (100), umfassend das Übertragungssystem (106) nach Anspruch 8.

10. Datenübertragungsverfahren zwischen einem mobilen Teil und einem stationären Teil einer Windmühle, das an einem von dem mobilen Teil und dem stationären Teil der Windmühle durchgeführt wird, und umfassend:
- Empfangen einer Vielzahl von Datenströmen durch Verbindungsmittel mit einer Vielzahl von Gruppen mindestens eines Kabels, wobei jede Gruppe einem jeweiligen Datenstrom entspricht, wobei jeder Strom von einer entsprechenden Einrichtung stammt, die an einem von dem mobilen Teil und dem stationären Teil der Windmühle installiert ist,
- Behandeln der empfangenen Ströme, um jedem empfangenen Strom einen Prioritätsparameterwert zuzuordnen, und, im Fall des gleichzeitigen Empfangs mehrerer Ströme, die Prioritätsparameterwerte zu vergleichen, die mit den empfangenen Strömen assoziiert sind, und prioritär zu einem Sende/Empfangsmodul von Funkfrequenzsignalen zu übertragen, für eine Funkfrequenzübertragung an den anderen von dem mobilen Teil und dem stationären Teil der Windmühle, wobei der mit dem Prioritätsparameterwert assoziierte Strom dem höchsten Prioritätsgrad entspricht.

## Claims

1. A device for transmitting data (601) between a movable portion and a stationary portion of a wind turbine, intended to be installed on the movable portion or the stationary portion of the wind turbine, and comprising:
- means for connecting (603, 603') to a plurality of groups at least one wireline, in order to receive a plurality of respective data streams, each stream coming from a corresponding apparatus installed on the movable portion or on the stationary portion, respectively, of the wind turbine,
- means for processing (604) the received streams, configured to assign a priority parameter value to each received stream, and in the event of concomitant reception of multiple streams, to compare the values of the priority parameter that are associated with the received streams and transmit as a priority to a module for transceiving radiofrequency signals, for the purpose of a radiofrequency transmission to the movable portion or the stationary portion, respectively, of the wind turbine, the stream associated with the value of the priority parameter corresponding to the highest degree of priority.

2. A device (601) according to claim 1, said device being arranged in such a way that for at least one stream, the priority parameter value assigned to this stream is obtained according to an identifier value of the communication protocol corresponding to said stream.

3. A device (601) according to any of claims 1 or 2, wherein the means for processing are arranged so as to transmit as a priority the stream associated with the value of the priority parameter corresponding to the highest degree of priority only when said means for processing are in a first operating mode, and wherein the means for processing are arranged so as to exit from this first operating mode and to switch to a second operating mode upon the reception of an abolition priority signal.

4. A device (601) according to any of claims 1 to 3, wherein
the connection means include a plurality of connection elements (603, 603'), with each element corresponding to one wireline, and
the device comprises a reprogrammable memory (605) for storing a plurality of connection element identifiers, with each identifier corresponding to the connecting element of the plurality of connecting elements, and a set of at least two distinct values of protocol identifiers, with this memory being arranged so as to associate with at least one connection element identifier a protocol identifier value.

5. A device (601) according to any of claims 1 to 4, wherein the means for processing are arranged so as to, for at least one group of at least one wireline, sort the data received into service information and into useful data, and so as to abstain from transmitting the data identified as service information to the module for transceiving radiofrequency signals.

6. A device (601) according to claim 5, wherein the means for processing are arranged in such a way as to generate a frame of data comprising useful data and structured in such a way as to allow for a later reconstruction of a frame according to a protocol implemented over the group of least one wireline corresponding to said useful data.

7. A device according to claim 6, wherein the means for processing are arranged in such a way as to generate a frame in accordance with a radiofrequency communications protocol and comprising the data frame.

8. A system for transmitting data (106) between a movable portion and a stationary portion of a wind turbine, comprising:
- a first interface module (201) intended to be installed on the movable portion or the stationary portion of the wind turbine, and comprising the device according to any of claims 1 to 7,
- a first module for transceiving radiofrequency signals (301), connected to the first interface module, in order to emit radiofrequency signals using signals received from the first interface module,
- a second module for transceiving radiofrequency signals (401), intended to be installed on the stationary portion or the movable portion, respectively, of the wind turbine, for receiving the radiofrequency signals emitted by the first module for transceiving, and
- a second interface module (202), connected to the second module for transceiving, comprising connection means for transmitting data coming from the second module of wireless transceiving over at least one group of at least one wireline (230), to at least one device installed on the stationary portion or the movable portion, respectively, of the wind turbine.

9. A wind turbine (100) comprising the system for transmitting (106) according to claim 8.

10. A method for transmitting data between a movable portion and a stationary portion of a wind turbine, implemented on the movable portion or the stationary portion of the wind turbine, and comprising:
- receiving a plurality of data streams, thanks to means for connecting to a plurality of groups at least one wireline, with each group corresponding to a respective data stream, each stream coming from a corresponding apparatus installed on the mobile portion or on the stationary portion, respectively, of the wind turbine,
- processing the received streams so as to assign a priority parameter value to each received stream, and in the event of concomitant reception of multiple streams, to compare the values of the priority parameter that are associated with the received streams and transmit as a priority to a module for transceiving radiofrequency signals, for the purpose of a radiofrequency transmission to the stationary portion or the movable portion, respectively, of the wind turbine, the stream associated with the value of the priority parameter corresponding to the highest degree of priority.
